# EUROPÄISCHE PATENTSCHRIFT

(11) **EP 3 489 174 B1**
(45) Veröffentlichungstag und Bekanntmachung des Hinweises auf die Patenterteilung: **09.11.2022**
(21) Anmeldenummer: 18207261.1
(22) Anmeldetag: 20.11.2018
(51) Int. Cl.: B65G 53/66

(54) **BAUSTOFF-DRUCKLUFTFÖRDERER**
BUILDING MATERIAL COMPRESSED AIR CONVEYOR
CONVOYEUR PNEUMATIQUE DE MATÉRIAU DE CONSTRUCTION

(30) Priorität: 22.11.2017 DE 102017220865
(43) Veröffentlichungstag der Anmeldung: 29.05.2019
(73) Patentinhaber: Putzmeister Mörtelmaschinen GmbH, 72631 Aichtal (DE)
(72) Erfinder: Hörz, Matthias, 70736 Fellbach-Schmiden (DE); Voss, Sebastian, 71111 Waldenbuch (DE)
(74) Vertreter: Patentanwälte Ruff, Wilhelm, Beier, Dauster & Partner mbB

(56) Entgegenhaltungen:
- EP-A1- 0 386 637
- EP-A1- 0 490 174
- WO-A1-97/45351
- DE-B- 1 148 938
- FR-A1- 2 812 864
- US-A1- 2017 121 130

## Beschreibung

### ANWENDUNGSGEBIET UND STAND DER TECHNIK

Die Erfindung bezieht sich auf einen Baustoff-Druckluftförderer.

EP 0 386 637 A1 offenbart ein Waschmittelpulver-Dosiergerät.

WO 97/45351 A1 offenbart ein Verfahren zur automatischen Erkennung einer Stabilitätsgrenze einer pneumatischen Schüttgutförderanlage.

US 2017/0121130 A1 offenbart Systeme und Verfahren zur Drucküberwachung von Luftwagen.

### AUFGABE UND LÖSUNG

Der Erfindung liegt als Aufgabe die Bereitstellung eines Baustoff-Druckluftförderers zugrunde, welcher das Handhaben von einer Verstopfungssituation erleichtert.

Die Erfindung löst diese Aufgabe durch die Bereitstellung eines Baustoff-Druckluftförderers mit den Merkmalen des Anspruchs 1. Vorteilhafte Weiterbildungen und/oder Ausgestaltungen der Erfindung sind in den abhängigen Ansprüchen beschrieben.

Der erfindungsgemäße Baustoff-Druckluftförderer weist eine Baustoffeinheit und eine Überwachungseinheit auf. Die Baustoffeinheit ist zur Bereitstellung von Baustoff ausgebildet. Des Weiteren ist die Baustoffeinheit zum Anschluss einer Drucklufteinheit für einen Fluss von Druckluft in die Baustoffeinheit hinein ausgebildet. Außerdem ist die Baustoffeinheit zum Anschluss einer Baustoff-Förderleitung für einen Fluss von Baustoff mittels Druckluft aus der Baustoffeinheit heraus ausgebildet. Weiter weist die Baustoffeinheit einen Förderbehälter auf. Der Förderbehälter ist zur Bereitstellung von Baustoff ausgebildet. Der Förderbehälter ist ein Mischbehälter, welcher zum Mischen von Baustoff ausgebildet ist. Die Baustoffeinheit ist zur Bereitstellung von Dickstoff ausgebildet, wie Mörtel, Zement, Estrich, Beton und/oder Putz. Die Überwachungseinheit weist einen, insbesondere elektrischen oder elektrisch auslesbaren, Drucksensor und eine, insbesondere elektrisch ansteuerbare, Ausgabeeinrichtung auf. Der Drucksensor ist zur, insbesondere automatischen und/oder zeitlich kontinuierlichen oder ständigen, Messung eines Ist-Druckwerts von Druckluft in der Baustoffeinheit ausgebildet. Der Drucksensor ist zur Messung des Ist-Druckwerts von Druckluft in dem Förderbehälter ausgebildet. Die Ausgabeeinrichtung ist dazu ausgebildet, bei Erreichung oder Überschreitung eines, insbesondere bedienervorgebbaren beziehungsweise bedienervorgegebenen oder definierten, Druckmaximalwerts, insbesondere in der Baustoffeinheit, durch den gemessenen Ist-Druckwert ein Förderleitungs-Verstopfungs-Signal auszugeben, insbesondere automatisch.

Bei der Baustoffförderung mit dem Baustoff-Druckluftförderer kann eine sogenannte Verstopfung beziehungsweise ein sogenannter Baustoff-Stopfer entstehen. Bei der Verstopfung kann es sich um eine festsitzende Baustoff-Ansammlung in der Baustoff-Förderleitung handeln, die je nach Förder- und/oder Baustoffbedingungen entstehen kann. Ist die Verstopfung entstanden, kann diese einen weiteren Fluss von Baustoff verhindern. Erst durch das Ausbleiben von Baustoff am Ende der Baustoff-Förderleitung, insbesondere an einem Auslaufbock, konnte bei einem bisherigen Baustoff-Druckluftförderer die Verstopfung, insbesondere durch einen Bediener, erkannt werden. Dann musste die Arbeit unterbrochen werden, die Position der Verstopfung in der Baustoff-Förderleitung durch den Bediener ermittelt werden und durch den Bediener versucht werden, die Verstopfung durch äußere Einwirkung auf die Baustoff-Förderleitung, wie Schütteln oder Klopfen, zu lösen. In der Regel war die Verstopfung auf diese Art und Weise schwerer oder bereits nicht mehr zu lösen, denn anstehende Druckluft hatte den Baustoff noch weiter verdichtet. Infolge dessen musste die Baustoff-Förderleitung zeitaufwendig geöffnet werden. Erst nach erfolgreicher Beseitigung der Verstopfung konnte mit der Arbeit, insbesondere der Förderung, fortgefahren werden.

Jetzt ermöglicht die Überwachungseinheit durch die Ausgabe des Förderleitungs-Verstopfungs-Signals dem Bediener die Verstopfung frühzeitig zu erkennen, insbesondere bereits während der Entstehung der Verstopfung. Somit kann der Bediener frühzeitig reagieren, insbesondere zu einem Zeitpunkt, zu welchem sich die Verstopfung noch relativ leicht beziehungsweise einfach lösen lässt. Die Überwachungseinheit kann als Stopfer-Frühwarn-System bezeichnet werden.

Denn durch die Verstopfung, insbesondere in der Baustoff-Förderleitung, kann keine oder zumindest weniger Druckluft aus der Baustoffeinheit herausfließen als in einem verstopfungsfreien Normalbetrieb. Somit verursacht die Verstopfung bei einem Fluss von Druckluft aus der Drucklufteinheit heraus in die Baustoffeinheit hinein und keinem oder zumindest einem geringeren Fluss von Druckluft aus der Baustoffeinheit heraus in die Baustoff-Förderleitung hinein einen unnormalen Anstieg des Ist-Druckwerts von Druckluft in der Baustoffeinheit. Der angestiegene Ist-Druckwert wird/ist mittels des Drucksensors gemessen und bei Erreichung des Druckmaximalwerts wird/ist das Förderleitungs-Verstopfungs-Signal mittels der Ausgabeeinrichtung ausgegeben. Im verstopfungsfreien Normalbetrieb wird der Ist-Druckwert von Druckluft in der Baustoffeinheit in der Regel nicht den Druckmaximalwert erreichen und somit wird/braucht kein Förderleitungs-Verstopfungs-Signal ausgegeben werden.

Insbesondere kann zur Förderung eines Flusses von Baustoff mittels Druckluft aus der Baustoffeinheit heraus die Druckluft auf den Baustoff einwirken, insbesondere direkten Kontakt mit dem Baustoff aufweisen, und/oder die Baustoffeinheit kann dazu ausgebildet sein. Die Druckluft kann als Förderluft bezeichnet werden. Der Ist-Druckwert kann als Förderdruckwert bezeichnet werden.

Der Drucksensor kann mit der Baustoffeinheit eine Druckluftverbindung aufweisen.

Die Ausgabeeinrichtung kann mit dem Drucksensor zusammenwirken, insbesondere eine Signalverbindung mit dem Drucksensor aufweisen.

Insbesondere kann die Überwachungseinheit eine, insbesondere elektrische, Steuereinheit aufweisen, welche mit dem Drucksensor und der Ausgabeeinrichtung zusammenwirken kann, insbesondere eine Signalverbindung mit dem Drucksensor und der Ausgabeeinrichtung aufweisen kann. In der Steuereinheit kann der Druckmaximalwert hinterlegt beziehungsweise gespeichert sein. Die Steuereinheit kann dazu ausgebildet sein, bei Erreichung des Druckmaximalwerts durch den gemessenen Ist-Druckwert die Ausgabeeinrichtung derart anzusteuern beziehungsweise zu aktivieren, insbesondere automatisch, dass die Ausgabeeinrichtung das Förderleitungs-Verstopfungs-Signal ausgeben kann. Die Steuereinheit kann ein Computer, Mikrokontroller oder eine mechanische Schaltung sein.

Die Baustoffeinheit kann zur Bereitstellung von Baustoff in einem förderfähigen Zustand ausgebildet sein. Der Baustoff kann als Baumaterial bezeichnet werden. Insbesondere kann der Dickstoff ein Gemisch aus flüssigen und festen Bestandteilen aufweisen, insbesondere sein. Zusätzlich oder alternativ kann die Baustoffeinheit zur Bereitstellung von Sand, Riesel und/oder Kies ausgebildet sein.

Die Baustoffeinheit kann zum lösbaren Anschluss der Baustoff-Förderleitung ausgebildet sein.

In einer Weiterbildung der Erfindung ist die Ausgabeeinrichtung dazu ausgebildet, das Förderleitungs-Verstopfungs-Signal optisch und/oder akustisch auszugeben. Dies ermöglicht dem Bediener ein einfaches und schnelles Wahrnehmen des Förderleitungs-Verstopfungs-Signals. Insbesondere ermöglicht das akustische Ausgeben, dass der Bediener keinen Blickkontakt zum Baustoff-Druckluftförderer zu haben braucht. Insbesondere kann die Ausgabeeinrichtung eine optische Ausgabeeinrichtung wie ein Display sein. Zusätzlich oder alternativ kann die Ausgabeeinrichtung eine akustische Ausgabeeinrichtung wie ein Lautsprecher, eine Hupe, ein Horn und/oder ein Summer sein.

In einer Weiterbildung der Erfindung weist der Baustoff-Druckluftförderer die Drucklufteinheit auf. Die Drucklufteinheit ist zur Erzeugung von Druckluft ausgebildet. Des Weiteren ist die Drucklufteinheit zum Anschluss der Baustoffeinheit für einen Fluss von Druckluft in die Baustoffeinheit hinein ausgebildet, insbesondere an die Baustoffeinheit für einen Fluss von Druckluft in die Baustoffeinheit hinein angeschlossen beziehungsweise mit dieser flusstechnisch verbunden. Insbesondere braucht die Drucklufteinheit nicht für Baustoff geeignet zu sein.

Die Drucklufteinheit kann einen Verbrennungsantriebsmotor, insbesondere einen Dieselantriebsmotor, aufweisen. Bei Verwendung des Verbrennungsantriebsmotors wird in der Regel während beziehungsweise nach der Entstehung der Verstopfung sich eine, insbesondere für den Bediener, akustisch wahrnehmbare Veränderung, insbesondere des Fördervorgangs, ergeben, insbesondere durch eine Drehzahlabsenkung des Verbrennungsantriebsmotors.

In einer Ausgestaltung der Erfindung weist die Drucklufteinheit einen, insbesondere elektrisch steuerbaren, Elektroantriebsmotor auf. Dieser ermöglicht einen relativ umweltfreundlichen Betrieb. Jedoch wird bei Verwendung des Elektroantriebsmotors in der Regel während beziehungsweise nach der Entstehung der Verstopfung sich keine, insbesondere für den Bediener, akustisch wahrnehmbare Veränderung, insbesondere des Fördervorgangs, ergeben. Somit ist die Überwachungseinheit mit dem Förderleitungs-Verstopfungs-Signal hier besonders vorteilhaft. Insbesondere kann der Elektroantriebsmotor zum Antrieb der Drucklufteinheit zur Erzeugung von Druckluft ausgebildet sein. Der Baustoff-Druckluftförderer beziehungsweise seine Drucklufteinheit beziehungsweise ihr Elektroantriebsmotor kann zum Anschluss an einen Kraftstromanschluss mit 400 Volt (V) und einer maximalen Strombelastung begrenzt auf maximal 16 Ampere (A) oder 32 A oder 63 A ausgebildet sein.

In einer Weiterbildung der Erfindung ist die Überwachungseinheit dazu ausgebildet, bei Erreichung des Druckmaximalwerts, insbesondere in der Baustoffeinheit, durch den gemessenen Ist-Druckwert den Baustoff-Druckluftförderer derart anzusteuern, insbesondere automatisch, dass der Baustoff-Druckluftförderer einen Fluss von Druckluft in die Baustoffeinheit hinein herunterregelt, insbesondere unterbindet. Dies ermöglicht, dass Druckluft den Baustoff nicht noch weiter verdichtet und somit die Verstopfung verschlimmert. Insbesondere kann dies ermöglichen, die Baustoffeinheit und die Baustoff-Förderleitung schnell in einen drucklosen Zustand zu bringen. Weiter kann dies ermöglichen, das Risiko eines unkontrollierten Entweichens des Druckes zu senken, beispielsweise durch ein plötzliches Lösen der Verstopfung.

In einer Ausgestaltung der Erfindung weist der Baustoff-Druckluftförderer mindestens ein, insbesondere elektrisch steuerbares, Regelventil auf. Das Regelventil ist zur Regelung eines Flusses von Druckluft aus der Drucklufteinheit heraus in die Baustoffeinheit hinein ausgebildet. Die Überwachungseinheit ist dazu ausgebildet, bei Erreichung des Druckmaximalwerts, insbesondere in der Baustoffeinheit, durch den gemessenen Ist-Druckwert das Regelventil derart anzusteuern, insbesondere automatisch, dass das Regelventil einen Fluss von Druckluft aus der Drucklufteinheit heraus in die Baustoffeinheit hinein heruntergeregelt bzw. herunterregelt, insbesondere unterbindet. Dies ermöglicht, dass die Drucklufteinheit während der Beseitigung der Verstopfung weiter für die Zeit nach der Beseitigung Druckluft erzeugen kann oder zumindest weiter laufen kann und nicht abgeschaltet zu werden braucht. Insbesondere kann dies in Kombination mit dem Elektroantriebsmotor, soweit vorhanden, eine optimale Nutzung der zur Verfügung stehenden elektrischen Leistung ermöglichen. Weiter kann dies einen schwankungsfreien und somit belastungsarmen Betrieb der Drucklufteinheit ermöglichen. Das Regelventil kann ein Freigabe- und Absperrventil sein, welches dazu ausgebildet sein kann, einen Fluss von Druckluft aus der Drucklufteinheit heraus in die Baustoffeinheit hinein freizugeben oder abzusperren.

In einer Ausgestaltung der Erfindung weist die Drucklufteinheit eine, insbesondere elektrisch steuerbare, Luftkompressoreinheit und einen, insbesondere elektrisch steuerbaren, Ansaugregler auf. Die Luftkompressoreinheit ist zur Ansaugung von Luft zur Erzeugung von Druckluft ausgebildet. Der Ansaugregler ist zur Regelung eines Flusses von durch die Luftkompressoreinheit angesaugter Luft ausgebildet. Die Überwachungseinheit ist dazu ausgebildet, bei Erreichung des Druckmaximalwerts, insbesondere in der Baustoffeinheit, durch den gemessenen Ist-Druckwert den Ansaugregler derart anzusteuern, insbesondere automatisch, dass der Ansaugregler einen Fluss von angesaugter Luft heruntergeregelt bzw. herunterregelt, insbesondere unterbindet. Dies ermöglicht, dass die Luftkompressoreinheit während der Beseitigung der Verstopfung weiter laufen kann und nicht abgeschaltet zu werden braucht. Insbesondere kann dies einen schwankungsfreien und somit belastungsarmen Betrieb der Luftkompressoreinheit ermöglichen. Die Luftkompressoreinheit kann als Luftverdichtereinheit bezeichnet werden. Der Elektroantriebsmotor, soweit vorhanden, kann zum Antrieb der Luftkompressoreinheit ausgebildet sein.

In einer Weiterbildung der Erfindung weist der Baustoff-Druckluftförderer die Baustoff-Förderleitung auf. Die Baustoff-Förderleitung ist zum, insbesondere lösbaren, Anschluss der Baustoffeinheit für einen Fluss von Baustoff mittels Druckluft aus der Baustoffeinheit heraus ausgebildet, insbesondere an die Baustoffeinheit für einen Fluss von Baustoff mittels Druckluft aus der Baustoffeinheit heraus angeschlossen beziehungsweise mit dieser flusstechnisch verbunden.

In einer Ausgestaltung der Erfindung weist die Baustoff-Förderleitung einen Förderschlauch für einen Fluss von Baustoff mittels Druckluft aus der Baustoffeinheit heraus auf. Insbesondere kann die Baustoff-Förderleitung ein Förderschlauch sein.

In einer Weiterbildung der Erfindung ist der Druckmaximalwert, insbesondere in der Baustoffeinheit, maximal 7,5 bar, insbesondere maximal 7 bar, insbesondere maximal 6,5 bar, insbesondere maximal 6 bar. Dieser Druckmaximalwert liegt über einem typischen Ist-Druckwert des verstopfungsfreien Normalbetriebs, insbesondere in der Baustoffeinheit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: einen Schaltplan eines erfindungsgemäßen Baustoff-Druckluftförderers und
- Fig. 2: eine Ausgabeeinrichtung des Baustoff-Druckluftförderers der Fig. 1 beim Ausgeben eines Förderleitungs-Verstopfungs-Signals.

### DETAILLIERTE BESCHREIBUNG DER AUSFÜHRUNGSBEISPIELE

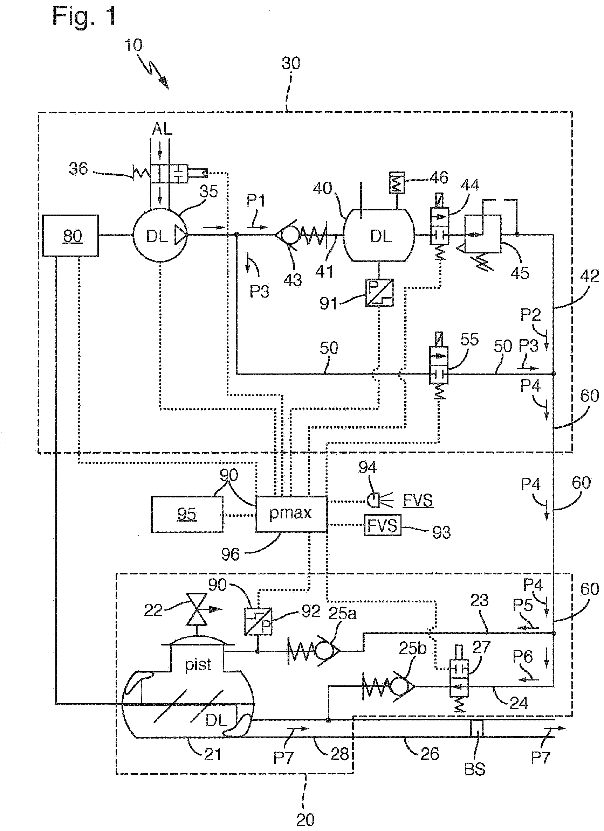

Der erfindungsgemäße Baustoff-Druckluftförderer 10 weist eine Baustoffeinheit 20, wie in Fig. 1 durch eine gestrichelte Linie angedeutet, und eine Überwachungseinheit 90 auf. Die Baustoffeinheit 20 ist zur Bereitstellung von Baustoff BS ausgebildet. Des Weiteren ist die Baustoffeinheit 20 zum Anschluss einer Drucklufteinheit 30, wie in Fig. 1 durch eine gestrichelte Linie angedeutet, für einen Fluss von Druckluft DL in die Baustoffeinheit 20 hinein ausgebildet. Außerdem ist die Baustoffeinheit 20 zum Anschluss einer Baustoff-Förderleitung 26 für einen Fluss von Baustoff BS mittels Druckluft DL aus der Baustoffeinheit 20 heraus ausgebildet. Die Überwachungseinheit 90 weist einen Drucksensor 92 und eine Ausgabeeinrichtung 93, 94 auf. Der Drucksensor 92 ist zur Messung eines Ist-Druckwerts pist von Druckluft DL in der Baustoffeinheit 20 ausgebildet. Die Ausgabeeinrichtung 93, 94 ist dazu ausgebildet, bei Erreichung eines Druckmaximalwerts pmax durch den gemessenen Ist-Druckwert pist ein Förderleitungs-Verstopfungs-Signal FVS auszugeben.

Im gezeigten Ausführungsbeispiel ist die Baustoffeinheit 20 zur Bereitstellung von Dickstoff ausgebildet, insbesondere Estrich.

Im Detail weist die Baustoffeinheit 20 einen Förderbehälter 21 auf, welcher zur Bereitstellung von Baustoff BS ausgebildet ist, insbesondere in einem förderfähigen Zustand. Im gezeigten Ausführungsbeispiel ist der Förderbehälter 21 als Mischbeschälter ausgebildet, welcher zum Mischen von Baustoff BS ausgebildet ist. In alternativen Ausführungsbeispielen braucht der Förderbehälter nicht als Mischbehälter ausgebildet zu sein. Der Drucksensor 92 ist zur Messung des Ist-Druckwerts pist von Druckluft DL in dem Förderbehälter 21 ausgebildet.

Des Weiteren weist die Baustoffeinheit 20 beziehungsweise ihr Förderbehälter 21 einen Abgangsstutzen 28 in Form eines Förderrohrs auf.

Außerdem weist die Baustoffeinheit 20 eine Oberluftleitung oder Behältereinleitung 23 für einen Fluss von Druckluft DL von der Drucklufteinheit 30 in den Förderbehälter 21 hinein zur Förderung eines Flusses von Baustoff BS mittels Druckluft DL aus dem Förderbehälter 21 heraus auf, wie in Fig. 1 durch einen Pfeil P5 angedeutet.

Weiter weist die Baustoffeinheit 20 eine Unterluftleitung oder Abgangsstutzeneinleitung 24 für einen Fluss von Druckluft DL von der Drucklufteinheit 30 in den Abgangsstutzen 28 hinein zur Förderung eines Flusses von Baustoff BS mittels Druckluft DL durch den Abgangsstutzen 28 hindurch auf, wie in Fig. 1 durch einen Pfeil P6 angedeutet. In alternativen Ausführungsbeispielen braucht die Baustoffeinheit keine Unterluftleitung aufzuweisen.

Im gezeigten Ausführungsbeispiel ist der Drucksensor 92 in der Baustoffeinheit 20 angeordnet. Im Detail ist der Drucksensor 92 direkt an der Oberluftleitung 23 angeordnet. In alternativen Ausführungsbeispielen kann der Drucksensor direkt an dem Förderbehälter, insbesondere an seinem Abgangsstutzen, oder direkt an der Unterluftleitung angeordnet sein.

Zudem weist der Baustoff-Druckluftförderer 10 die Baustoff-Förderleitung 26 in Form eines Förderschlauchs auf. Die Baustoff-Förderleitung 26 ist zum, insbesondere lösbaren, Anschluss der Baustoffeinheit 20 für einen Fluss von Baustoff BS mittels Druckluft DL aus der Baustoffeinheit 20 heraus ausgebildet, wie in Fig. 1 durch einen Pfeil P7 angedeutet, im gezeigten Ausführungsbeispiel an die Baustoffeinheit 20 für einen Fluss von Baustoff BS mittels Druckluft DL aus der Baustoffeinheit 20 heraus angeschlossen. Im Detail ist die Baustoff-Förderleitung 26 an den Förderbehälter 21 beziehungsweise seinen Abgangsstutzen 28 angeschlossen. In alternativen Ausführungsbeispielen braucht der Baustoff-Druckluftförderer die Baustoff-Förderleitung nicht aufzuweisen.

Des Weiteren weist der Baustoff-Druckluftförderer 10 eine Druckluft-Förderleitung 60 auf. Die Druckluft-Förderleitung 60 ist für einen Fluss von Druckluft DL, insbesondere aus der Drucklufteinheit 30 heraus, in die Baustoffeinheit 20 hinein zur Förderung eines Flusses von Baustoff BS mittels Druckluft DL aus der Baustoffeinheit 20 heraus ausgebildet, wie in Fig. 1 durch Pfeile P4 angedeutet.

Im gezeigten Ausführungsbeispiel gehen die Oberluftleitung 23 und die Unterluftleitung 24, insbesondere innerhalb der Baustoffeinheit 20, von der Druckluft-Förderleitung 60 ab. In anderen Worten: die Oberluftleitung 23 und die Unterluftleitung 24 beziehungsweise jeweilige Leitungsanfänge von diesen sind mit der Drucklufteinheit 30 durch die Druckluft-Förderleitung 60 flusstechnisch verbunden, insbesondere für einen Fluss von Druckluft DL aus der Drucklufteinheit 30 heraus. Die Druckluft-Förderleitung 60 des gezeigten Ausführungsbeispiels kann als Druckluft-Förderverteilleitung bezeichnet werden.

Außerdem weist der Baustoff-Druckluftförderer 10 mindestens ein Rückschlagventil 25a, 25b in Form eines Rückschlagklappenventils auf, im gezeigten Ausführungsbeispiel zwei. Das mindestens eine Rückschlagventil 25a, 25b ist an der Baustoffeinheit 20 dazu angeordnet, einen Fluss von Baustoff BS aus der Baustoffeinheit 20 heraus in die Drucklufteinheit 30 hinein, insbesondere in die Druckluft-Förderleitung 60 hinein, zu sperren.

Im gezeigten Ausführungsbeispiel ist eines der Rückschlagventile 25a an der Oberluftleitung 23, insbesondere zwischen dem Drucksensor 92 und der Druckluft-Förderleitung 60, dazu angeordnet, einen Fluss von Baustoff BS aus dem Förderbehälter 21 heraus durch die Oberluftleitung 23 hindurch in die Druckluft-Förderleitung 60 hinein zu sperren. Das andere der Rückschlagventile 25a ist an der Unterluftleitung 24, insbesondere zwischen dem Förderbehälter 21 beziehungsweise seinem Abgangsstutzen 28 und der Druckluft-Förderleitung 60, dazu angeordnet, einen Fluss von Baustoff BS aus dem Förderbehälter 21 heraus durch die Unterluftleitung 24 hindurch in die Druckluft-Förderleitung 60 hinein zu sperren.

Weiter weist die Baustoffeinheit 20 ein, insbesondere elektrisch steuerbares, Unterfreigabe- und Absperrventil 27 in Form eines 2/2 Wegeventils auf. Das Unterfreigabe- und Absperrventil 27 ist an der Unterluftleitung 24, insbesondere zwischen dem Rückschlagventil 25b und der Druckluft-Förderleitung 60, dazu angeordnet, einen Fluss von Druckluft DL aus der Druckluft-Förderleitung 60 heraus durch die Unterluftleitung 24 hindurch in den Förderbehälter 21 beziehungsweise seinen Abgangsstutzen 28 hinein freizugeben oder abzusperren.

Zudem weist die Baustoffeinheit 20 einen Entlüftungshahn 22 auf, welcher an dem Förderbehälter 21 zum Entlüften des Förderbehälters 21 angeordnet ist, insbesondere bei einem Auffüllen des Förderbehälters 21 mit Baustoff BS. Im Detail weist die Baustoffeinheit 20 beziehungsweise ihr Förderbehälter 21 eine nicht dargestellte Einfüllöffnung auf, über welche der Förderbehälter 21, insbesondere diskontinuierlich, mit Baustoff BS aufgefüllt werden kann. Nach einem Auffüllen kann die Einfüllöffnung verschlossen werden und der Förderbehälter 21 kann mit Druckluft DL befüllt beziehungsweise beaufschlagt werden.

Des Weiteren weist der Baustoff-Druckluftförderer 10 die Drucklufteinheit 30 auf. Die Drucklufteinheit 30 ist zur Erzeugung von Druckluft DL ausgebildet. Des Weiteren ist die Drucklufteinheit 30 zum Anschluss der Baustoffeinheit 20 für einen Fluss von Druckluft DL in die Baustoffeinheit 20 hinein ausgebildet, im gezeigten Ausführungsbeispiel mittels der Druckluft-Förderleitung 60 an die Baustoffeinheit 20 für einen Fluss von Druckluft DL in die Baustoffeinheit 20 hinein angeschlossen. In alternativen Ausführungsbeispielen braucht der Baustoff-Druckluftförderer die Drucklufteinheit nicht aufzuweisen.

Außerdem weist die Drucklufteinheit 30 einen Elektroantriebsmotor 80 auf. Der Elektroantriebsmotor 80 ist zum Antrieb der Drucklufteinheit 30 zur Erzeugung von Druckluft DL ausgebildet.

Im Detail ist der Elektroantriebsmotor 80 zum Anschluss an einen Kraftstromanschluss mit 400 V und einer maximalen Strombelastung begrenzt auf maximal 32 A ausgebildet. Zusätzlich ist im gezeigten Ausführungsbeispiel der Elektroantriebsmotor 80 zum Antrieb der Baustoffeinheit 20 beziehungsweise ihres Förderbehälters 21 ausgebildet. In alternativen Ausführungsbeispielen braucht der Elektroantriebsmotor nicht zum Antrieb der Baustoffeinheit ausgebildet oder vorgesehen zu sein.

Weiter ist die Überwachungseinheit 90 dazu ausgebildet, bei Erreichung des Druckmaximalwerts pmax durch den gemessenen Ist-Druckwert pist den Baustoff-Druckluftförderer 10 derart anzusteuern, dass der Baustoff-Druckluftförderer 10 einen Fluss von Druckluft DL in die Baustoffeinheit 20 hinein herunterregelt, insbesondere unterbindet.

Im Detail weist der Baustoff-Druckluftförderer 10 mindestens ein Regelventil 44, 55 auf. Das mindestens eine Regelventil 44, 55 ist zur Regelung eines Flusses von Druckluft DL aus der Drucklufteinheit 30 heraus in die Baustoffeinheit 20 hinein ausgebildet. Die Überwachungseinheit 90 ist dazu ausgebildet, bei Erreichung des Druckmaximalwerts pmax durch den gemessenen Ist-Druckwert pist das mindestens eine Regelventil 44, 55 derart anzusteuern, dass das mindestens eine Regelventil 44, 55 einen Fluss von Druckluft DL aus der Drucklufteinheit 30 heraus in die Baustoffeinheit 20 hinein heruntergeregelt bzw. herunterregelt, insbesondere unterbindet.

Zudem weist die Drucklufteinheit 30 eine Luftkompressoreinheit 35 in Form eines Schraubenverdichters und einen Ansaugregler 36 auf. Die Luftkompressoreinheit 35 ist zur Ansaugung von Luft AL zur Erzeugung von Druckluft DL ausgebildet. Der Ansaugregler 36 ist zur Regelung eines Flusses von durch die Luftkompressoreinheit 35 angesaugter Luft AL ausgebildet. Die Überwachungseinheit 90 ist dazu ausgebildet, bei Erreichung des Druckmaximalwerts pmax durch den gemessenen Ist-Druckwert pist den Ansaugregler 36 derart anzusteuern, dass der Ansaugregler 36 einen Fluss von angesaugter Luft AL heruntergeregelt bzw. herunterregelt, insbesondere unterbindet. Im gezeigten Ausführungsbeispiel ist der Elektroantriebsmotor 80 zum Antrieb der Luftkompressoreinheit 35 ausgebildet.

Im gezeigten Ausführungsbeispiel weist die Drucklufteinheit 30 einen Luft-Druckspeicher 40, eine Speichereinleitung 41, eine Speicherausleitung 42 und eine Umgehungsleitung 50 auf. Der Luft-Druckspeicher 40 ist zur Speicherung von Druckluft DL ausgebildet. Die Speichereinleitung 41 ist für einen Fluss von Druckluft DL von der Luftkompressoreinheit 35 in den Luft-Druckspeicher 40 hinein ausgebildet, wie in Fig. 1 durch einen Pfeil P1 angedeutet. Die Speicherausleitung 42 ist für einen Fluss von Druckluft DL aus dem Luft-Druckspeicher 40 heraus in die Baustoffeinheit 20 hinein zur Förderung eines Flusses von Baustoff BS mittels Druckluft DL aus der Baustoffeinheit 20 heraus ausgebildet, wie in Fig. 1 durch einen Pfeil P2 angedeutet. Die Umgehungsleitung 50 ist für einen Fluss von Druckluft DL von der Luftkompressoreinheit 35 um den Luft-Druckspeicher 40 herum in die Baustoffeinheit 20 hinein zur Förderung eines Flusses von Baustoff BS mittels Druckluft DL aus der Baustoffeinheit 20 heraus ausgebildet, wie in Fig. 1 durch Pfeile P3 angedeutet.

Im Detail weist die Drucklufteinheit 30 das mindestens eine Regelventil 44, 55 auf, im gezeigten Ausführungsbeispiel zwei. Eines der Regelventile 55 ist ein Umgehungsfreigabe- und Absperrventil 55 in Form eines 2/2 Wegeventils. Das Umgehungsfreigabe- und Absperrventil 55 ist an der Umgehungsleitung 50 dazu angeordnet, einen Fluss von Druckluft DL von der Luftkompressoreinheit 35 durch die Umgehungsleitung 50 hindurch in die Baustoffeinheit 20 hinein freizugeben oder abzusperren. Das andere der Regelventile 44 ist ein Speicherfreigabe- und Absperrventil 44 in Form eines 2/2 Wegeventils. Das Speicherfreigabe- und Absperrventil 44 ist an der Speicherausleitung 42 dazu angeordnet, einen Fluss von Druckluft DL aus dem Luft-Druckspeicher 40 heraus durch die Speicherausleitung 42 hindurch in die Baustoffeinheit 20 hinein freizugeben oder abzusperren.

Des Weiteren weist die Drucklufteinheit 30 ein Speicherrückschlagventil 43 in Form eines Rückschlagklappenventils auf. Das Speicherrückschlagventil 43 ist an der Speichereinleitung 41 dazu angeordnet, einen Fluss von Druckluft DL aus dem Luft-Druckspeicher 40 heraus durch die Speichereinleitung 41 hindurch in die Luftkompressoreinheit 35 hinein oder in die Umgehungsleitung 50 hinein zu sperren.

Im gezeigten Ausführungsbeispiel münden die Speicherausleitung 42 und die Umgehungsleitung 50, insbesondere innerhalb der Drucklufteinheit 30, in die Druckluft-Förderleitung 60 ein. In anderen Worten: die Speicherausleitung 42 und die Umgehungsleitung 50 beziehungsweise jeweilige Leitungsenden von diesen sind mit der Baustoffeinheit 20 durch die Druckluft-Förderleitung 60 flusstechnisch verbunden, insbesondere für einen Fluss von Druckluft DL in die Baustoffeinheit 20 hinein.

In alternativen Ausführungsbeispielen kann es ausreichen, wenn die Drucklufteinheit entweder den Luft-Druckspeicher mit der Speichereinleitung und der Speicherausleitung oder die Umgehungsleitung aufweisen kann. Entsprechend kann es ausreichen, wenn der Baustoff-Druckluftförderer beziehungsweise seine Drucklufteinheit entweder das Regelventil in Form des Speicherfreigabe- und Absperrventils oder das Regelventil in Form des Umgehungsfreigabe- und Absperrventils aufweisen kann. Zusätzlich oder alternativ kann in alternativen Ausführungsbeispielen das Regelventil an der Druckluft-Förderleitung angeordnet sein.

Außerdem weist im gezeigten Ausführungsbeispiel die Drucklufteinheit 30 ein Sicherheitsventil 46 auf, welches an dem Luft-Druckspeicher 40 dazu angeordnet ist, einen maximalen Betriebsdruck des Luft-Druckspeichers 40 auf 12 bar zu begrenzen.

Weiter weist die Drucklufteinheit 30 einen Druckminderer 45 auf. Der Druckminderer 45 ist an der Speicherausleitung 42, insbesondere zwischen dem Regelventil 44 in Form des Speicherfreigabe- und Absperrventils und der Druckluft-Förderleitung 60, dazu angeordnet, Druckluft DL aus dem Luft-Druckspeicher 40 heraus in die Baustoffeinheit 20 hinein auf einen maximalen Betriebsdruck von maximal 8 bar zu begrenzen.

Im gezeigten Ausführungsbeispiel ist der Druckmaximalwert pmax maximal 7,5 bar. Zudem weist die Überwachungseinheit 90 eine Steuereinheit 96 auf. In der Steuereinheit 96 ist der Druckmaximalwert pmax hinterlegt.

Des Weiteren weist der Baustoff-Druckluftförderer 10 beziehungsweise seine Überwachungseinheit 90 ein benutzerbetätigbares Bedienfeld 95 zur Bedienung des Baustoff-Druckluftförderers 10 auf, insbesondere zum Vorgeben des Druckmaximalwerts pmax.

Außerdem weist im gezeigten Ausführungsbeispiel der Baustoff-Druckluftförderer 10 beziehungsweise seine Überwachungseinheit 90 einen, insbesondere elektrisch auslesbaren, Drucksensor 91 auf, welcher an dem Luft-Druckspeicher 40 dazu angeordnet ist, einen Ist-Druck von Druckluft DL innerhalb des Luft-Druckspeichers 40 zu messen.

Im gezeigten Ausführungsbeispiel ist die Steuereinheit 96 mit dem Drucksensor 92, der Ausgabeeinrichtung 93, 94, dem Elektroantriebsmotor 80, dem Regelventil 55 in Form des Umgehungsfreigabe- und Absperrventils, dem Regelventil 44 in Form des Speicherfreigabe- und Absperrventils, der Luftkompressoreinheit 35, dem Ansaugregler 36, dem Unterfreigabe- und Absperrventil 27, dem Drucksensor 91 und dem Bedienfeld 95 jeweils, insbesondere elektrisch, gekoppelt, wie in Fig. 1 durch gepunktete Linien angedeutet. Im Detail ist die Steuereinheit 96 dazu ausgebildet, die Ausgabeeinrichtung 93, 94, den Elektroantriebsmotor 80, das Regelventil 55, das Regelventil 44, die Luftkompressoreinheit 35, den Ansaugregler 36 und das Unterfreigabe- und Absperrventil 27 anzusteuern.

Die Steuereinheit 96 ist dazu ausgebildet, den Baustoff-Druckluftförderer 10 derart anzusteuern, dass für die Förderung eines Flusses von Baustoff BS aus der Baustoffeinheit 20 mittels Druckluft DL heraus Druckluft DL aus der Drucklufteinheit 30 heraus in die Baustoffeinheit 20 hinein fließt, insbesondere Druckluft DL aus dem Luft-Druckspeicher 40 heraus und Druckluft DL von der Luftkompressoreinheit 35 durch die Umgehungsleitung 50 hindurch.

Im nicht gezeigten verstopfungsfreien Normalbetrieb, insbesondere im verstopfungsfreien Förderbetrieb, wird der Ist-Druckwert pist von Druckluft DL in der Baustoffeinheit 20 in der Regel nicht den Druckmaximalwert pmax von 7,5 bar erreichen und somit wird kein Förderleitungs-Verstopfungs-Signal FVS ausgegeben.

Im gezeigten Ausführungsbeispiel entsteht eine Verstopfung von Baustoff BS in der Baustoff-Förderleitung 26 beziehungsweise ist entstanden, wie in Fig. 1 rechts unten zu erkennen. Die Verstopfung verursacht, insbesondere im Förderbetrieb, einen Anstieg des Ist-Druckwerts pist von Druckluft DL in der Baustoffeinheit 20 beziehungsweise ihrem Förderbehälter 21 mit Abgangsstutzen 28, ihrer Oberluftleitung 23 und ihrer Unterluftleitung 24. Der angestiegene Ist-Druckwert pist wird mittels des Drucksensors 92 gemessen und bei Erreichung des Druckmaximalwerts pmax wird das Förderleitungs-Verstopfungs-Signal FVS mittels der Ausgabeeinrichtung 93, 94 ausgegeben.

Im Detail ist die Ausgabeeinrichtung 93, 94 dazu ausgebildet, das Förderleitungs-Verstopfungs-Signal FVS optisch und akustisch auszugeben. In alternativen Ausführungsbeispielen kann es ausreichen, wenn die Ausgabeeinrichtung dazu ausgebildet sein kann, das Förderleitungs-Verstopfungs-Signal entweder optisch oder akustisch auszugeben.

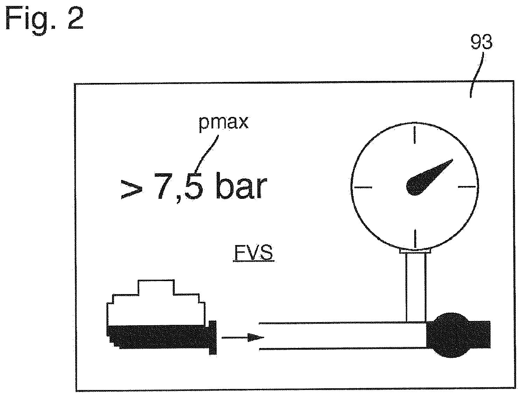

Im gezeigten Ausführungsbeispiel weist die Ausgabeeinrichtung ein Display 93 und einen Summer 94 auf. Auf dem Display 93 wird durch die Ausgabe eines Symbols für das Förderleitungs-Verstopfungs-Signal FVS dem Bediener das Erreichen des Druckmaximalwertes pmax visualisiert, wie in Fig. 2 zu erkennen. Zusätzlich untermauert wird diese Meldung durch das akustische Förderleitungs-Verstopfungs-Signal FVS von dem Summer 94, welches/r den Bediener auch ohne Blickkontakt zum Display 93 entsprechend informiert.

Weiter steuert die Überwachungseinheit 90 beziehungsweise ihre Steuereinheit 96 den Baustoff-Druckluftförderer 10 derart an, dass der Baustoff-Druckluftförderer 10 einen Fluss von Druckluft DL in die Baustoffeinheit 20 hinein herunterregelt. Dies ermöglicht die Baustoffeinheit 20 und die Baustoff-Förderleitung 26 schnell in einen drucklosen Zustand zu bringen.

Im Detail steuert die Überwachungseinheit 90 das Regelventil 55 in Form des Umgehungsfreigabe- und Absperrventils und das Regelventil 44 in Form des Speicherfreigabe- und Absperrventils jeweils auf Absperrung an. Dies ermöglicht, dass die Drucklufteinheit 30 während der Beseitigung der Verstopfung weiter Druckluft DL erzeugen kann.

Insbesondere steuert die Überwachungseinheit 90 den Elektroantriebsmotor 80 beziehungsweise die Luftkompressoreinheit 35 und den Ansaugregler 36 jeweils derart an, dass die Luftkompressoreinheit 35 den Luft-Druckspeicher 40 mit Druckluft auf 12 bar befüllt, und insbesondere nicht unnötigerweise weiter. Dies ist der Überwachungseinheit 90 beziehungsweise ihrer Steuereinheit 96 durch den Drucksensor 91 ermöglicht.

Zudem steuert die Überwachungseinheit 90 den Ansaugregler 36 derart an, dass der Ansaugregler 36 einen Fluss von angesaugter Luft AL heruntergeregelt bzw. herunterregelt, insbesondere unterbindet. Dies ermöglicht, dass der Elektroantriebsmotor 80 beziehungsweise die Luftkompressoreinheit 35 während der Beseitigung der Verstopfung weiter laufen kann. Wie die gezeigten und oben erläuterten Ausführungsbeispiele deutlich machen, stellt die Erfindung einen vorteilhaften Baustoff-Druckluftförderer bereit, welcher das Handhaben von einer Verstopfungssituation erleichtert.

## Patentansprüche

1. Baustoff-Druckluftförderer (10), wobei der Baustoff-Druckluftförderer (10) aufweist:
- eine Baustoffeinheit (20), welche zur Bereitstellung von Baustoff (BS), zum Anschluss einer Drucklufteinheit (30) für einen Fluss von Druckluft (DL) in die Baustoffeinheit (20) hinein und zum Anschluss einer Baustoff-Förderleitung (26) für einen Fluss von Baustoff (BS) mittels Druckluft (DL) aus der Baustoffeinheit (20) heraus ausgebildet ist, wobei die Baustoffeinheit (20) einen Förderbehälter (21) aufweist, welcher zur Bereitstellung von Baustoff (BS) ausgebildet ist, wobei der Förderbehälter (21) ein Mischbehälter ist, welcher zum Mischen von Baustoff (BS) ausgebildet ist, wobei die Baustoffeinheit (20) zur Bereitstellung von Dickstoff ausgebildet ist, und
- eine Überwachungseinheit (90) aufweisend einen Drucksensor (92), welcher zur Messung eines Ist-Druckwerts (pist) von Druckluft (DL) in der Baustoffeinheit (20) ausgebildet ist, wobei der Drucksensor (92) zur Messung des Ist-Druckwerts (pist) von Druckluft (DL) in dem Förderbehälter (21) ausgebildet ist, und eine Ausgabeeinrichtung (93, 94), welche dazu ausgebildet ist, bei Erreichung eines Druckmaximalwerts (pmax) durch den gemessenen Ist-Druckwert (pist) ein Förderleitungs-Verstopfungs-Signal (FVS) auszugeben.

2. Baustoff-Druckluftförderer (10) nach Anspruch 1,
- wobei die Ausgabeeinrichtung (93, 94) dazu ausgebildet ist, das Förderleitungs-Verstopfungs-Signal (FVS) optisch und/oder akustisch auszugeben.

3. Baustoff-Druckluftförderer (10) nach einem der vorhergehenden Ansprüche, aufweisend:
- die Drucklufteinheit (30), welche zur Erzeugung von Druckluft (DL) und zum Anschluss der Baustoffeinheit (20) für einen Fluss von Druckluft (DL) in die Baustoffeinheit (20) hinein ausgebildet ist.

4. Baustoff-Druckluftförderer (10) nach Anspruch 3,
- wobei die Drucklufteinheit (30) einen Elektroantriebsmotor (80) aufweist.

5. Baustoff-Druckluftförderer (10) nach einem der vorhergehenden Ansprüche,
- wobei die Überwachungseinheit (90) dazu ausgebildet ist, bei Erreichung des Druckmaximalwerts (pmax) durch den gemessenen Ist-Druckwert (pist) den Baustoff-Druckluftförderer (10) derart anzusteuern, dass der Baustoff-Druckluftförderer (10) einen Fluss von Druckluft (DL) in die Baustoffeinheit (20) hinein herunterregelt.

6. Baustoff-Druckluftförderer (10) nach Anspruch 5, aufweisend:
- mindestens ein Regelventil (44, 55), welches zur Regelung eines Flusses von Druckluft (DL) aus der Drucklufteinheit (30) heraus in die Baustoffeinheit (20) hinein ausgebildet ist, und
- wobei die Überwachungseinheit (90) dazu ausgebildet ist, bei Erreichung des Druckmaximalwerts (pmax) durch den gemessenen Ist-Druckwert (pist) das Regelventil (44, 55) derart anzusteuern, dass das Regelventil (44, 55) einen Fluss von Druckluft (DL) aus der Drucklufteinheit (30) heraus in die Baustoffeinheit (20) hinein herunterregelt.

7. Baustoff-Druckluftförderer (10) nach Anspruch 5 oder 6,
- wobei die Drucklufteinheit (30) eine Luftkompressoreinheit (35), welche zur Ansaugung von Luft (AL) zur Erzeugung von Druckluft (DL) ausgebildet ist, und einen Ansaugregler (36) aufweist, welcher zur Regelung eines Flusses von durch die Luftkompressoreinheit (35) angesaugter Luft (AL) ausgebildet ist, und
- wobei die Überwachungseinheit (90) dazu ausgebildet ist, bei Erreichung des Druckmaximalwerts (pmax) durch den gemessenen Ist-Druckwert (pist) den Ansaugregler (36) derart anzusteuern, dass der Ansaugregler (36) einen Fluss von angesaugter Luft (AL) herunterregelt.

8. Baustoff-Druckluftförderer (10) nach einem der vorhergehenden Ansprüche, aufweisend:
- die Baustoff-Förderleitung (26), welche zum Anschluss der Baustoffeinheit (20) für einen Fluss von Baustoff (BS) mittels Druckluft (DL) aus der Baustoffeinheit (20) heraus ausgebildet ist.

9. Baustoff-Druckluftförderer (10) nach Anspruch 8,
- wobei die Baustoff-Förderleitung (26) einen Förderschlauch für einen Fluss von Baustoff (BS) mittels Druckluft (DL) aus der Baustoffeinheit (20) heraus aufweist.

10. Baustoff-Druckluftförderer (10) nach einem der vorhergehenden Ansprüche,
- wobei der Druckmaximalwert (pmax) maximal 7,5 bar ist.

## Claims

1. Building material compressed-air conveyor (10), wherein the building material compressed-air conveyor (10) has:
- a building material unit (20) which is designed for providing building material (BS), for connecting a compressed-air unit (30) for a flow of compressed air (DL) into the building material unit (20) and for connecting a building material conveying line (26) for a flow of building material (BS) by means of compressed air (DL) out of the building material unit (20), wherein the building material unit (20) has a conveying container (21) which is designed for providing building material (BS), wherein the conveying container (21) is a mixing container which is designed for mixing building material (BS), wherein the building material unit (20) is designed for providing thick matter, and
- a monitoring unit (90) having a pressure sensor (92) which is designed for measuring an actual pressure value (pist) of compressed air (DL) in the building material unit (20), wherein the pressure sensor (92) is designed for measuring the actual pressure value (pist) of compressed air (DL) in the conveying container (21), and an output device (93, 94) which is designed, when a maximum pressure value (pmax) has been reached by the measured actual pressure value (pist), to output a conveying line blockage signal (FVS).

2. Building material compressed-air conveyor (10) according to Claim 1,
- wherein the output device (93, 94) is designed to output the conveying line blockage signal (FVS) optically and/or acoustically.

3. Building material compressed-air conveyor (10) according to either of the preceding claims, having:
- the compressed-air unit (30) which is designed for generating compressed air (DL) and for connecting the building material unit (20) for a flow of compressed air (DL) into the building material unit (20) .

4. Building material compressed-air conveyor (10) according to Claim 3,
- wherein the compressed-air unit (30) has an electric drive motor (80).

5. Building material compressed-air conveyor (10) according to one of the preceding claims,
- wherein the monitoring unit (90) is designed, when the maximum pressure value (pmax) has been reached by the measured actual pressure value (pist), to control the building material compressed-air conveyor (10) in such a way that the building material compressed-air conveyor (10) regulates down a flow of compressed air (DL) into the building material unit (20).

6. Building material compressed-air conveyor (10) according to Claim 5, having:
- at least one regulating valve (44, 55) which is designed for regulating a flow of compressed air (DL) out of the compressed-air unit (30) into the building material unit (20), and
- wherein the monitoring unit (90) is designed, when the maximum pressure value (pmax) has been reached by the measured actual pressure value (pist), to control the regulating valve (44, 55) in such a way that the regulating valve (44, 55) regulates down a flow of compressed air (DL) out of the compressed-air unit (30) into the building material unit (20).

7. Building material compressed-air conveyor (10) according to Claim 5 or 6,
- wherein the compressed-air unit (30) has an air compressor unit (35) which is designed for sucking in air (AL) to generate compressed air (DL), and an intake regulator (36) which is designed for regulating a flow of air (AL) sucked in by the air compressor unit (35), and
- wherein the monitoring unit (90) is designed, when the maximum pressure value (pmax) has been reached by the measured actual pressure value (pist), to control the intake regulator (36) in such a way that the intake regulator (36) regulates down a flow of sucked-in air (AL).

8. Building material compressed-air conveyor (10) according to one of the preceding claims, having:
- the building material conveying line (26) which is designed for connecting the building material unit (20) for a flow of building material (BS) by means of compressed air (DL) out of the building material unit (20).

9. Building material compressed-air conveyor (10) according to Claim 8,
- wherein the building material conveying line (26) has a conveying hose for a flow of building material (BS) by means of compressed air (DL) out of the building material unit (20).

10. Building material compressed-air conveyor (10) according to one of the preceding claims,
- wherein the maximum pressure value (pmax) is at most 7.5 bar.

## Revendications

1. Transporteur de matériau de construction à air comprimé (10), le transporteur de matériau de construction à air comprimé (10) comportant :
- une unité de matériau de construction (20) qui est conçue pour fournir du matériau de construction (BS), raccorder une unité d'air comprimé (30) pour produire un flux d'air comprimé (DL) jusque dans l'unité de matériau de construction (20) et raccorder une conduite d'alimentation en matériau de construction (26) pour produire un flux de matériau de construction (BS) au moyen d'air comprimé (DL) depuis l'unité de matériau de construction (20), l'unité de matériau de construction (20) comportant un récipient de transport (21) qui est conçu pour fournir du matériau de construction (BS), le récipient de transport (21) étant un récipient de mélange qui est conçu pour mélanger le matériau de construction (BS), l'unité de matériau de construction (20) étant conçue pour fournir un matériau épais, et
- une unité de surveillance (90) comportant un capteur de pression (92) qui est conçu pour mesurer une valeur de pression réelle (pist) de l'air comprimé (DL) dans l'unité de matériau de construction (20), le capteur de pression (92) étant conçu pour mesurer la valeur de pression réelle (pist) de l'air comprimé (DL) dans le récipient de transport (21), et un dispositif de sortie (93, 94) qui est conçu, lorsqu'une valeur de pression maximale (pmax) est atteinte par la valeur de pression réelle (pist) mesurée, pour délivrer un signal de bourrage de conduite de transport (FVS).

2. Transporteur de matériau de construction à air comprimé (10) selon la revendication 1,
le dispositif de sortie (93, 94) état conçu pour délivrer le signal de bourrage de conduite de transport (FVS) par des moyens optiques et/ou acoustiques.

3. Transporteur de matériau de construction à air comprimé (10) selon l'une des revendications précédentes, comportant :
- l'unité d'air comprimé (30) qui est conçue pour générer de l'air comprimé (DL) et pour raccorder l'unité de matériau de construction (20) pour produire un flux d'air comprimé (DL) jusque dans l'unité de matériau de construction (20).

4. Transporteur de matériau de construction à air comprimé (10) selon la revendication 3,
- l'unité d'air comprimé (30) comportant un moteur d'entraînement électrique (80).

5. Transporteur de matériau de construction à air comprimé (10) selon l'une des revendications précédentes,
- l'unité de surveillance (90) étant conçue, lorsque la valeur de pression maximale (pmax) est atteinte par la valeur de pression réelle (pist), pour commander le transporteur de matériau de construction à air comprimé (10) de telle sorte que le transporteur de matériau de construction à air comprimé (10) régule à la baisse un flux d'air comprimé (DL) jusque dans l'unité de matériau de construction (20).

6. Transporteur de matériau de construction à air comprimé (10) selon la revendication 5, comportant :
- au moins une vanne de régulation (44, 55) qui est conçue pour réguler un flux d'air comprimé (DL) allant de l'unité d'air comprimé (30) jusque dans l'unité de matériau de construction (20), et
- l'unité de surveillance (90) étant conçue, lorsque la valeur de pression maximale (pmax) est atteinte par la valeur de pression réelle (pist) mesurée, pour commander la vanne de régulation (44, 55) de telle sorte que la vanne de régulation (44, 55) régule à la baisse un flux d'air comprimé (DL) allant de l'unité d'air comprimé (30) jusque dans l'unité de matériau de construction (20).

7. Transporteur de matériau de construction à air comprimé (10) selon la revendication 5 ou 6,
- l'unité d'air comprimé (30) comportant une unité formant compresseur d'air (35) qui est conçue pour aspirer de l'air (AL) afin de générer de l'air comprimé (DL), et un régulateur d'aspiration (36) qui est conçu pour réguler un flux d'air (AL) aspiré par l'unité formant compresseur d'air (35), et
- l'unité de surveillance (90) étant conçue, lorsque la valeur de pression maximale (pmax) est atteinte par la valeur de pression réelle (pist) mesurée, pour commander le régulateur d'aspiration (36) de telle sorte que le régulateur d'aspiration (36) régule à la baisse un flux l'air (AL) aspiré.

8. Transporteur de matériau de construction à air comprimé (10) selon l'une des revendications précédentes, comportant :
- la conduite de transport de matériau de construction (26) qui est conçue pour raccorder l'unité de matériau de construction (20) pour produire un flux de matériau de construction (BS) au moyen d'air comprimé (DL) depuis l'unité de matériau de construction (20).

9. Transporteur de matériau de construction à air comprimé (10) selon la revendication 8,
- la conduite de transporteur de matériau de construction (26) comportant un tuyau de transport d'un flux de matériau de construction (BS) au moyen d'air comprimé (DL) depuis l'unité de matériau de construction (20) .

10. Transporteur de matériau de construction à air comprimé (10) selon l'une des revendications précédentes,
- la valeur de pression maximale (pmax) étant de 7,5 bar maximum.
